# EUROPÄISCHE PATENTSCHRIFT

(11) **EP 0 305 776 B1**
(45) Veröffentlichungstag und Bekanntmachung des Hinweises auf die Patenterteilung: **05.05.1993**
(21) Anmeldenummer: 88112959.7
(22) Anmeldetag: 10.08.1988
(51) Int. Cl.: F04D 13/02, H02K 7/11

(54) **Heizungswasserumwälzpumpe**
Heating water circulating pump
Pompe à circulation d'eau de chauffage

(30) Priorität: 20.08.1987 DE 3727758
(43) Veröffentlichungstag der Anmeldung: 08.03.1989
(73) Patentinhaber: Licentia Patent-Verwaltungs-GmbH, 60596 Frankfurt (DE)
(72) Erfinder: Frohmüller, Klaus, D-2900 Oldenburg (DE)
(74) Vertreter: Vogl, Leo, Dipl.-Ing.

(56) Entgegenhaltungen:
- EP-A- 0 217 235
- CH-A- 455 525
- DE-A- 1 728 405
- DE-A- 1 728 406
- US-A- 2 669 668
- US-A- 2 951 447
- US-A- 3 649 137

## Beschreibung

Die Erfindung bezieht sich auf eine Ümwälzpumpe mit elektromotorischem Antrieb für Warmwasserheizungsanlagen der im Oberbegriff des Patentanspruchs 1 angegebenen Art.

Gemäß dem DE-GBM 19 12 189 ist es bekannt, bei Heizungswasserumwälzpumpen zwischen dem Elektromotor und dem Pumpenrad zur Übertragung des Drehmomentes eine permanentmagnetische Kupplung vorzusehen, deren beide Kupplungshälften durch eine membranartige Zwischenwand flüssigkeitsdicht voneinander getrennt sind. Dadurch ist auch die Pumpe vom Antriebsmotor flüssigkeitsdicht getrennt und es ist möglich, einen Elektromotor üblicher Bauart als Pumpenantrieb zu verwenden. Nachteilig ist jedoch der relativ schlechte Wirkungsgrad einer solchen Anordnung, insbesondere dann, wenn die angetriebene Kupplungshälfte lediglich als weichmagnetische Rückschlußplatte ausgebildet ist.

Durch die EP-A 217 235 ist eine Umwälzpumpe bekannt, die als Laugenpumpe mit einer Magnetkupplung in einer Waschmaschine oder in einer Geschirrspülmaschine einsetzbar ist. Aufgrund des konstruktiven Aufbaus ist diese Pumpe für eine Warmwasserheizungsanlage weniger geeignet.

Auch ist durch die US-PS 2,669,668 eine magnetisch angetriebene Zentrifugalpumpe bekannt, die aber separat angetrieben und gar keinen eingebauten Antriebsmotor enthält.

Der vorliegenden Erfindung liegt somit die Aufgabe zugrunde, eine Heizungswasserumwälzpumpe der eingangs beschriebenen Art hinsichtlich ihrer konstruktiven Ausgestaltung soweit zu verbessern, daß ein optimaler Wirkungsgrad sowohl der Kupplung als auch der gesamten Pumpeneinheit erreicht und deren Betriebssicherheit verbessert wird. Darüber hinaus soll mittels geeigneter Formgebung der einzelnen, der Pumpeneinheit zugehörigen Bauteile die Möglichkeit geschaffen werden, die Montage weitestgehend durch Anwendung von Fertigungsautomaten durchzuführen.

Die Aufgabe wird gemäß der Erfindung im wesentlichen durch die im Kennzeichen des Anspruchs 1 aufgeführten Merkmale gelöst. In den Unteransprüchen 2 bis 3 sind weitere vorteilhafte Ausbildungen des Erfindungsgegenstandes gekennzeichnet.

Die Erfindung bringt den Vorteil mit sich, daß infolge der Anordnung des Motorläufers und des Pumpenrades auf einer gemeinsamen Achse eine einwandfreie zentrische Ausrichtung dieser beiden Bauelemente, insbesondere aber der zwischen beiden Bauelementen angeordneten Kupplungshälften erreicht wird. Dies wiederum hat eine beträchtliche Steigerung der übertragbaren Kupplungsleistung bei gleichzeitiger Verkürzung der axialen Baulänge zur Folge. Die Herstellung der Membrane und des B-seitigen Motorlagerschildes als Kunststoff-Spritzgußteile vereinfacht den Aufbau der Anordnung und senkt die Montagekosten.

Durch die Erfindung werden mit einem Geringtmaß an Aufwand einerseits wegen der nur geringen Wandstärke der Membran eine Verbesserung des Wirkungsgrads der Pumpe erreicht und andererseits ein Eindringen von Fremdkörpern in den Bereich zwischen Kupplung und Membrane vermieden. Insbesondere ist auch einem Absetzen von ferromagnetischen Teilchen am Magnetring vorgebeugt.

Ein Ausführungsbeispiel der Erfindung ist in der Zeichnung dargestellt und wird im folgenden näher beschrieben.

### Es zeigen:

- Figur 1: einen Querschnitt durch die Gesamtanordnung, Pumpe- Kupplung-Antrieb.
- Fig. 2: einen Querschnitt durch die membranartige Zwischenwand, welche die zentrale Achse trägt.

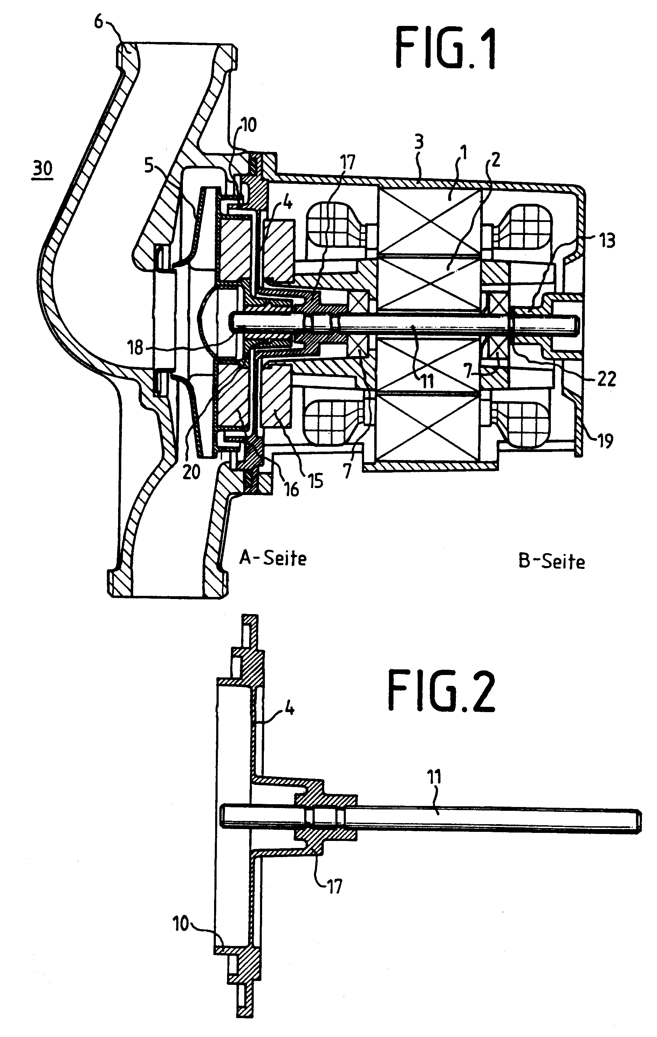

In der Fig. 1 ist die Pumpenanordnung im Querschnitt dargestellt. Der beispielsweise als zweipoliger Asynchronmotor ausgebildete Antriebsmotor besitzt einen Ständer 1 und eine Läufer 2 und wird von einem Gehäuse 3, dessen Bauart der vorgeschriebenen Schutzart entspricht, aufgenommen. Der Läufer 2 rotiert um die feststehende Achse 11 und ist auf dieser mittels der Lager 7 gelagert. Der A-seitige Kurzschlußring des Läufers 2 ist über den Wickelkopfraum des Ständers 1 hinaus verlängert und trägt an seinem freien Ende die motorseitige Kupplungshälfte 15.

Die Achse 11 bildet das zentrale Bauteil, um welches die Motor- Pumpen-Anordnung aufgebaut ist. Die Befestigung der Achse 11 erfolgt einerseits in einem besonders zu diesem Zweck ausgebildeten Abschnitt 17 der membranartigen Zwischenwand 4 und andererseits im B-seitigen Lagerschild des Antriebsmotors. Der Läufer 2 ist zwischen diesen beiden Befestigungspunkten der Achse 11 auf eine beliebige Art gelagert. Das freie Ende 18 der Achse 11 ragt in den Pumpenraum und trägt ein Lager 20 zur Aufnahme der pumpenseitigen Kupplungshälfte 16 und des Pumpenrades
Die Umwälzpumpe 30 ist als Kreiselpumpe ausgebildet und besitzt ein Gehäuse 6, das im wesentlichen schneckenförmig ausgebildet ist. Das im Gehäuse 6 rotierende Pumpenrad 5 ist auf seiner dem Antriebsmotor zugewandten Seite mit der pumpenseitigen Kupplungshälfte 16 drehfest verbunden, beispielsweise durch teilweises Umspritzen mit dem Werkstoff des Pumpenrades 5. In gleicher Weise kann auch das Lager 20 befestigt sein.

Das B-seitige Lagerschild 19 ist vorzugsweise einteilig mit dem Motorgehäuse 3 ausgebildet und trägt zentrisch zur Motorachse eine Aufnahme 13 für die Achse 11, die unverdrehbar und axial unverschiebbar darin gehaltert ist. Das B-seitige Lagerschild dient darüber hinaus dazu, die membranartige Zwischenwand 4 über die Achse 11 vom im Heizungssystem herrschenden und auf die Membrane wirkenden Druck zu entlasten. Zu diesem Zweck trägt die Achse 11 in einer Einkerbung den Simmerring 22, der direkt an der Aufnahme 13 anliegt.

Die dem Antriebsmotor zugewandte Seite des Pumpengehäuses 6 ist flüssigkeitsdicht abgedeckt durch die Zwischenwand 4, die im Bereich der beiden einander zugeordneten Kupplungshälften 15 und 16 membranartig dünn ausgebildet ist. Wie aus Fig. 2 ersichtlich, trägt die Zwischenwand 4 mittig, beim beschriebenen Ausführungsbeispiel zentrisch zur Membrane, einen Abschnitt 17, dessen Gestaltung zur Aufnahme und Halterung der Achse 11 geeignet ausgebildet ist. Der am Gehäuse 6 anliegende Abschnitt der Zwischenwand 4 ist mit dem Gehäuse 6 fest oder lösbar flüssigkeitsdicht verbunden. Im Bereich des Außenumfanges des Pumpenrades 5 bildet die Zwischenwand durch Anordnung eines oder mehrer ringförmiger Vorsprünge 10, die mit entsprechenden Gegenstücken am Pumpenrad in Wirkverbindung stehen, zu einer Labyrinthdichtung, die das Eindringen von Fremdkörpern in den Bereich zwischen Kupplung und Membran verhindern soll.

Die Kupplung zwischen dem Antriebsmotor und dem Pumpenrad besteht aus den Kupplungshälften 15 und 16, die in der oben beschriebenen Weise, jedoch auch andersartig, an den ihnen zugeordneten Bauteilen befestigt sein können. Beide Kupplungshälften 15 und 16 sind als Permanentmagnete ein- oder mehrteilig ausgebildet. Beim beschriebenen Ausführungsbeispiel finden ringförmige Permanentmagnete Anwendung. Diese sind solcherart magnetisiert, daß - in Umfangsrichtung gesehen - abwechselnd Nord- und Südpole aufeinanderfolgen, d.h. eine sogenannte "sternförmige" Magnetisierung vorgesehen ist. Beim bevorzugten Ausführungsbeispiel sind insgesamt acht gegensätzliche Magnetpole auf jeder Kupplungsscheibe angeordnet. Dadurch wird erreicht, daß die Größe des zwischen den beiden Kupplungshälften zu übertragenden Drehmomentes ungleichmäßig über den Kupplungsumfang verteilt ist, d.h. Abschnitte, die die Übertragung eines großen Drehmomentes zulassen, mit Abschnitten abwechseln, innerhalb derer nur geringeres Drehmoment übertragbar ist. Daraus ergibt sich der Vorteil, daß bei Verdrehung beider Kupplungshälften gegeneinander eine Stoßartig auftretende Drehmomenterhöhung erzielbar ist, durch die beispielsweise Anlaufschwierigkeiten nach längerem Pumpenstillstand problemlos überwunden werden können, somit also ein Losbrechmoment erzielbar ist. Andererseits aber ist gemäß der Erfindung das durch die Kupplung übertragbare Drehmoment größer als das Kippmoment des Antriebsmotors. Dadurch wird erreicht, daß bei totaler Blockierung des Pumpenrades der Antriebsmotor ebenfalls stillsteht, zwischen den Kupplungshälften somit keine Drehbewegung erfolgt und somit auch keine Überhitzung der Magnetscheiben infolge des Durchdrehens nur einer Kupplungshälfte möglich ist. Je nach Bauart des Antriebsmotors wird dieser bei stillstehender Kupplung über Wärmefühler, Bewegungsdetektoren oder andere geeignete Mittel vom Netz getrennt.

Zur Verhinderung des Ansetzens von im Heizungswasserkreislauf eventuell vorhandenen ferromagnetischen Teilchen bzw. Eisenspänen und dergleichen, die trotz der Labyrinthdichtung an den pumpenseitigen Kupplungsmagneten gelangen, ist das Pumpengehäuse so ausgebildet, daß zwischen dem Pumpenrad und der daran angebrachten Kupplungshälfte ein Zwischenraum angeordnet ist, in welchem sich eine sehr hohe Strömungsgeschwindigkeit der zu fördernden Flüssigkeit einstellt, so daß die Teilchen mitgerissen werden und sich nicht am Magnetring absetzen können. Dieser Zwischenraum wird beispielsweise durch Vergrößerung des die Kupplungshälfte 16 radial umgebenden Raumes gebildet.

Gemäß einer weiteren vorteilhaften Ausbildung der Erfindung wird vorgeschlagen, die pumpenseitige Kupplungshälfte 16 mit einer ggf. topfförmigen Hülse aus Mumetall oder einem anderen geeigneten Werkstoff geringer magnetischer Feldstärke zu umgeben um dadurch die Ablagerung von Eisenspänen zu verhindern.

In vorteilhafter Weise bestehen die Kupplungshälften aus einem permanentmagnetischen Werkstoff, dessen Feldstärke auch bei maximaler Betriebstemperatur des Heizungswassers - etwa 110° - ausreichend groß ist, um ein das Kippmoment des Antriebsmotors übersteigender Drehmoment zu übertragen.

Die Auswuchtung der ringförmigen, vorzugsweise im Sinterverfahren hergestellten Kupplungshälften 15, 16 erfolgt dadurch, daß im Bereich der Peripherie jeder Kupplungshälfte 15, 16 bereits bei deren Herstellung eingepreßte Sacklöcher angeordnet sind, die nach Bedarf mit Wuchtmasse gefüllt werden.

In ebenfalls vorteilhafter Weise sind sämtliche dazu geeigneten Einzelteile der Pumpenanordnung und des Antriebsmotors im druck- oder spritzgußverfahren aus geeigneten Werkstoffen, insbesondere Kunststoffen hergestellt. So besitzt auch das Pumpengehäuse 6 eine konstruktive Ausbildung der Gehäusewandungen, die es ermöglicht, eine Gußform mit lediglich zwei Kernzugrichtungen anzuwenden. Das Motorgehäuse 3 ist vorzugsweise als tropfwassergeschütztes Gehäuse ausgebildet und besitzt gegen herabtropfendes Wasser abgedeckte Kühlluftöffnungen.

Die Ausgestaltung der einzelnen Bauteile macht es möglich, die Motor-Pumpen-Einheit weitestgehend vollautomatisch mittels Fertigungsautomaten zu montieren.

## Patentansprüche

1. Umwälzpumpe mit elektromotorischem Antrieb für Warmwasserheizungsanlagen, mit einer flüssigkeitsdichten Zwischenwand (4) zwischen dem Rotor- und dem Pumpenraum und einer feststehenden Achse (11), welche die Zwischenwand (4) durchdringt, wobei auf dem motorseitigen Abschnitt der Achse (11) der Rotor (2) und auf dem pumpenseitigen Abschnitt das Pumpenrad (5) jeweils drehbar gelagert sind und wobei die Kraftübertragung zwischen Rotor und Pumpenrad mittels einer Magnetkupplung erfolgt, die aus je einem am Rotor (2) und am Pumpenrad (5) angeordneten Permanentmagnetring besteht, wobei die als ringscheibenförmige Permanentmagnetkörper ausgebildeten Kupplungsscheiben (15, 16) jeweils in mehrere in Umfangsrichtung aufeinanderfolgende Abschnitte entgegengesetzter magnetischer Polarisierung unterteilt sind und diese Abschnitte sternförmig auf den Kupplungsscheiben (15, 16) angeordnet sind und jeweils eine Mehrzahl Pole bilden und wobei das zwischen den Kupplungsscheiben (15, 16) übertragbare Drehmoment aufgrund der Auslegung der Permanentmagnete größer ist als das Kippmoment des antreibenden Elektromotors, **dadurch gekennzeichnet,** daß die Zwischenwand (4) membranartig ausgebildet ist und im Bereich ihres Außenrandes einen oder mehrere aus ihrer Ebene herausragende ringförmige Vorsprünge (10) besitzt, die korrespondierend mit axialen Vorsprüngen an der membranseitigen Fläche des Pumpenrades (5) eine Labyrinthdichtung bilden, daß die membranartige Zwischenwand (4) als im wesentlichen kreisringförmiges Bauteil ausgebildet ist, dessen Außenrand eine ringförmige Dichtfläche bildet und/oder Aufnahmen für Dichtungsmittel aufweist, und welches zentrisch einen nabenartigen Abschnitt (17) zur Aufnahme und Halterung der Achse (11) besitzt und daß auf die ringförmige Dichtfläche der membranartigen Zwischenwand (4) ein Dichtungsmittel im Siebdruckverfahren aufgebracht ist.

2. Umwälzpumpe nach Anspruch 1, **dadurch gekennzeichnet,** daß die membranartige Zwischenwand (4) als einstückiges Spritzgußteil aus einem bis ca. 120° wärmefesten Kunststoff hergestellt und daß die Achse (11) in dieses Bauteil eingespritzt ist.

3. Umwälzpumpe nach Anspruch 1, **dadurch gekennzeichnet,** daß das Pumpengehäuse (6), das Motorgehäuse (3) und der Lagerschild (19) im Spritzgußverfahren aus einem wärmefesten Kunststoff hergestellt sind.

## Claims

1. Circulating pump with electrical motor drive for hot water heating installations, with a liquid-tight partition (4) between the rotor space and the pump space and a stationary axle (11), which penetrates the partition (4), wherein the rotor (2) is rotatably mounted on the portion of the axle (11) at the side of the motor and the impeller (5) on the portion at the side of the pump and wherein the power transmission between rotor and impeller is effected by means of a magnet clutch, which consists of a respective permanent magnet ring arranged at each of the rotor (2) and the impeller (5), wherein the clutch discs (15, 16) constructed as permanent magnet bodies of annular disc shape are each divided into several sections which follow one another in circumferential direction and one of opposite magnetic polarisation and these sections are arranged in star shape on the clutch discs (15, 16) and respectively form a plurality of poles and wherein the torque transmissible between the clutch discs (15, 16) is greater due to the disposition of the permanent magnets than the pull-out torque of the driving electrical motor, characterised thereby that the partition (4) is constructed to be diaphragm-like and in the region of its outer edge processes one or more annular projections (10), which project out of its plane and which, corresponding with axial projections at the face of the impeller (5) at the side of the diaphragm, form a labyrinth seal, that the diaphragm-like partition (4) is constructed as a substantially circularly annular component, the outer edge of which forms an annular sealing surface and/or has receptacles for sealing means, and which has centrally a hublike portion (17) for the reception and retention of the axle (11) and that a sealing means is applied by screen printing process on the annular sealing surface of the diaphragm-like partition (4).

2. Circulating pump according to claim 1, characterised thereby that the diaphragm-like partition (4) is produced as an integral injection-moulded part of synthetic material which is heat-resistant up to about 120° and that the axle (11) is injection moulded in this component.

3. Circulating pump according to claim 1, characterised thereby that the pump housing (6), the motor housing (3) and the bearing plate (19) are produced by injection moulding process.

## Revendications

1. Pompe de circulation entraînée par moteur électrique pour des installations de chauffage à eau chaude, présentant une paroi intermédiaire étanche au fluide (4) entre la chambre de la pompe et du rotor et un axe fixe (11), qui traverse la paroi intermédiaire (4), le rotor (2) sur la section côté moteur de l'axe (11) et la roue de pompe (5) sur la section côté pompe étant, chacun, logés de manière rotative et le transfert de force entre le rotor et la roue de pompe étant effectué à l'aide d'un accouplement à aimant, qui se compose d'un aimant torique permanent disposé sur le rotor (2) et sur la roue de pompe (5), les disques d'accouplement (15, 16) conçus comme des corps d'aimants permanents en forme de disque annulaire étant divisés, chacun, en plusieurs sections de polarisation magnétique opposée, se succèdant dans le sens périphérique et ces sections étant disposées en forme d'étoile sur les disques d'accouplement (15, 16) et formant, chacun, une pluralité de pôles et le couple de rotation à transférer entre les disques d'accouplement (15, 16) étant, en raison de la disposition des aimants permanents, supérieurs au couple maximum du moteur électrique d'entraînement, caractérisée en ce que la paroi intermédiaire (4) est conçue comme une membrane et dispose, dans la zone de son bord externe, d'une ou de plusieurs saillies (10) de forme annulaire, débordant de son plan, lesquelles forment une bague à labyrinthe, de manière à correspondre aux saillies axiales sur la surface côté membrane de la roue de pompe (5), en ce que la paroi intermédiaire (4) du type membrane est conçue comme un composant essentiellement en forme d'anneau de cercle, dont le bord externe forme une surface étanche de forme annulaire et/ou présente des logements pour des moyens d'étanchéité, ce composant dispose, au centre, d'une section du type moyeu (17) pour le logement et la fixation de l'axe (11) et en ce que dans le procédé de sérigraphie, un moyen d'étanchéité est appliqué sur la surface étanche de forme annulaire de la paroi intermédiaire du type membrane (4).

2. Pompe à circulation selon la revendication 1, caractérisée en ce que la paroi intermédiaire du type membrane (4) est fabriquée, en tant que pièce indivisible moulable par injection, dans une matière plastique résistant à la chaleur jusqu'à environ 120° et que l'axe (11) est injecté dans ce composant.

3. Pompe à circulation selon la revendication 1, caractérisée en ce que le carter de pompe (6), le carter de moteur (3) et la flasque (19) sont fabriqués par le procédé de moulage par injection à partir d'une matière plastique résistant à la chaleur.
